(19) Europäisches Patentamt
European Patent Office
Office européen des brevets

(11) **EP 4 064 119 A1**

(12) **EUROPEAN PATENT APPLICATION**

(43) Date of publication:
**28.09.2022 Bulletin 2022/39**

(21) Application number: **21164791.2**

(22) Date of filing: **25.03.2021**

(51) International Patent Classification (IPC):
*G06K 9/00* (2022.01)      *G06K 9/62* (2022.01)
*G06F 21/45* (2013.01)      *G06Q 50/30* (2012.01)

(52) Cooperative Patent Classification (CPC):
**G06K 9/629; G06F 21/31; G06F 21/32;
G06F 21/34; G06K 9/6293; G06V 30/422;
G06V 40/172; G06V 40/174; G06V 40/40;
G06V 40/67; G06V 40/70**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Authenteq Tarbena GmbH
10437 Berlin (DE)**

(72) Inventor: **WILLOMITZER, Thomas
1080 Wien (AT)**

(74) Representative: **Weiser & Voith
Patentanwälte Partnerschaft
Kopfgasse 7
1130 Wien (AT)**

(54) **METHOD AND SYSTEM FOR IDENTIFYING A PERSON**

(57)    The present invention relates to a method (6) for identifying a person (P) comprising: receiving (8) at least one image (IM); computing ($10_1$) authenticity values ($AV_j$), calculating ($10_2$), from the authenticity values, an authenticity probability (AP), and checking ($10_3$); receiving (9) a representation (REP); computing ($11_1$) verification values ($VV_k$), calculating ($11_2$), from the verification values, a verification probability (VP), and checking ($11_3$); computing ($12_1$) matching values ($MV_1$), calculating ($12_2$), from the computed matching values, a matching probability (MP), and checking ($12_3$); determining ($13_1$) whether the identity document (2) includes an identifier (ID), and extracting ($13_2$) said identifier; and only when first, second and third thresholds ($TH_A$, $TH_V$, $TH_M$) are each exceeded and said identifier (ID) has been extracted, identifying (17) said person (P) by the extracted identifier (ID). The invention further relates to a computer system (7) carrying out said method.

Fig. 3

EP 4 064 119 A1

**Description**

The present invention relates to a method for identifying a person, the method being carried out by a computer system. The invention further relates to the computer system carrying out said method.

When a person shall be identified, e.g., by a customs official at a border, the person usually presents an identity document, e.g., a passport, and the customs official checks both the identity document for authenticity and the matching of the person with the identity document, e.g., by a photograph of the person's face on the presented identity document. A computer system carrying out such a task, as it may be desired, for example, for automatic entrance control in a building, for online registering with a bank, a shop, an office or a government agency, or for logging into a server, etc., is neither straightforward nor simple. While it is easy to record an image of the identity document or of the person's face by a camera and transmit the recorded image(s) to the computer system, it is rather complex to match the recorded face of the person with a photograph of the identity document and particularly complex to authenticate the identity document. Different procedures for performing these tasks are known; most of them rely on machine learning models, such as artificial neural networks or decision trees.

Given the wide variety of increasingly specific security features, like barcodes, QR-codes, water marks or laser engravings on identity documents issued by different authorities, the employed machine learning models have to be of complex structure and have to run through extensive training; still they do not determine the authenticity of a variety of identity documents as accurately as desired. Moreover, more complex machine learning models do not necessarily produce more accurate results. If, for instance, a neural network is trained on identity documents with certain security features it will generally perform worse on these identity documents once identity documents with other features are included in the training data. The same applies to matching of faces which common machine learning models, due to the varieties, e.g., different ages, complexions and shapes of faces, etc. do not perform as accurately as desired.

To prohibit fraudulent use of a pre-recorded image of a face instead of a live image of the person, i.e., without the person to be identified being present, so called "liveness" checks may have to be performed which are similarly complex tasks for computer systems.

On the whole, present procedures may, on the one hand, result in failures when identifying a person, i.e., both in false negative and false positive results, and, on the other hand, facilitate fraudulent use and raise security concerns.

It is an object of the present invention to provide an efficient and flexible method and computer system which allow for more accurately and securely identifying a person.

In a first aspect, this object is achieved with a method for identifying a person, the method being carried out by a computer system and comprising:

receiving, in the computer system, at least one image of a document, which image has been recorded by a camera;

a first set of steps of computing, from the received image, a predetermined first number of authenticity values each computed by a different authentication unit of the computer system and indicating a probability that the image shows an identity document including a photograph of a face, calculating, from the computed authenticity values, an authenticity probability, and checking whether the calculated authenticity probability exceeds a predetermined first threshold;

receiving, in the computer system, a representation of a person's face, which representation has been recorded by a recording device;

a second set of steps of computing, from the received representation, a predetermined second number of verification values each computed by a different verification unit of the computer system and indicating a probability that the representation includes at least one of a predetermined pose of a face and a three-dimensional shape of a face, calculating, from the computed verification values, a verification probability, and checking whether the calculated verification probability exceeds a predetermined second threshold;

a third set of steps of computing, from the received image and the received representation, a predetermined third number of matching values each computed by a different matching unit of the computer system and indicating a probability that the face on said photograph matches the face in said representation, calculating, from the computed matching values, a matching probability, and checking whether the calculated matching probability exceeds a predetermined third threshold;

determining whether the identity document includes an identifier of a person, and, if so, extracting said identifier; and

only when said first, second and third thresholds are each exceeded and said identifier has been extracted, identifying said person by the extracted identifier; wherein at least one of said first, second and third numbers is larger than one.

The method of the invention is based on the insight that different procedures for identity document authentication, liveness verification or face matching compute authenticity, verification and matching values of different accuracies when applied to different identity documents, different faces or different poses and shapes, respectively. By using different procedures, i.e., by using different authentication, verification and matching units in the respective steps of computing and by combining the computed authenticity, verification and matching values to respective authenticity, verification and matching probabilities, the overall accuracy increases. Nevertheless, there is no increase of complexity in any of said units, which makes the method efficient.

It shall be noted that the effect occurs already when only one of said first, second and third numbers is larger than one, i.e., when two or more authenticity values are computed (each by a different authentication unit), or when two or more verification values are computed (each by a different verification unit), or when two or more matching values are computed (each by a different matching unit), thereby yielding a more accurate check of the authenticity of the identity document in the first set of steps, or of the "liveness" of the person in the second set of steps, or of the matching of the face of the live person and the face on the photograph of the identity document and, consequently, a more accurate determination of (here: one of) authenticity, liveness or matching. Alternatively, two or all three of said first second and third numbers may be larger than one, of course.

As a result, both falsely identifying a person (false positives) and falsely not identifying a person (false negatives) are reduced and fraudulent use is impeded such that the method is both more accurate and more secure.

Moreover, the method is highly scalable and flexible. Whenever a set of steps does not yield sufficiently accurate results, e.g., for a certain type of documents, faces or poses, a respective further unit, e.g., suited for this type, can be added to the computer system to increase the overall accuracy. Thus, units of simpler structure which are tailored to certain types of documents, faces or poses may be employed (or added whenever required), which further increases the efficiency of the method.

In an advantageous embodiment said pose is at least one of a position of said face in the representation, an orientation of said face in the representation, and an expression of said face, wherein the method further comprises, prior to said step of receiving the representation, choosing said pose from a predetermined set of positions, orientations and/or expressions, and indicating the person to be identified, the chosen pose to be adopted by the person. This simplifies the liveness check as the person has to reflect the indicated pose such that the use of a previously stored - and potentially abused - representation of the face of a person not being present is efficiently impeded. The larger the set of positions, orientations and/or expressions, the harder is any fraudulent use.

A particularly preferred variant of this embodiment comprises measuring a time from indicating the chosen pose until receiving the representation and, when the measured time exceeds a predetermined timing threshold, terminating the method without identifying said person. Requiring the person to be identified to react in a timely manner is a particularly simple additional criterion for liveness.

The invention provides for three favourable embodiments to accurately calculate the authenticity, verification and matching probabilities, respectively, which embodiments can be combined depending on the particular requirements:

In the first favourable embodiment the first number is larger than one such that each authenticity value is computed by a different authentication unit, the authenticity probability is calculated as a weighted sum of the authenticity values, and the weights of the weighted sum are assigned by a trained first machine learning model on the basis of the received image. The first machine learning model has been trained on images and the corresponding accuracies of the authenticity values computed by each authentication unit, e.g., based on properties of the image such as brightness, hue, saturation or resolution, and/or on the type of document or security features included in the image. On the basis of the received image the trained machine learning model assigns higher weights to authenticity values of the authentication units that compute, for the received image, more accurate authenticity values than others. This increases the accuracy of the authenticity probability.

In the second favourable embodiment the second number is larger than one such that each verification value is computed by a different verification unit, the verification probability is calculated as a weighted sum of the verification values, and the weights of the weighted sum are assigned by a trained second machine learning model on the basis of the received representation. Similarly, the second machine learning model has been trained on representations and the corresponding accuracies of the verification values computed by each verification unit, e.g., based on properties of the representation, e.g., its two-dimensional ("2D") or three-dimensional ("3D") resolution, on the pose and/or the face included in the representation; then the trained machine learning model assigns higher weights to more accurate verification values for the received representation to increase the accuracy of the verification probability.

Similarly, in the third favourable embodiment, the third number is larger than one such that each matching value is computed by a different matching unit, the matching probability is calculated as a weighted sum of the matching values, and the weights of the weighted sum are assigned by a trained third machine learning model on the basis of the received image and the received representation to increase the accuracy of the matching probability.

In all of these favourable embodiments it is beneficial when in said step of determining it is also determined whether the identity document, apart from said identifier, includes OCR-readable information on said person, and, if so, said information is OCR-read and the weights of at least one of said weighted sums are assigned by the respective machine learning model also on the basis of the OCR-read information. For example, such OCR-read information, i.e., information read by means of optical character recognition ("OCR"), is the date of birth, the eye or hair colour, etc. of the person to be identified. Different units and procedures of computing typically differ in accuracy when applied to, e.g., younger or older faces, i.e., faces of persons having a later or an earlier date of birth. Hence, the respective machine learning model trained on these differences assigns higher weights to those values which, according to the OCR-read information, are more accurate.

In another advantageous embodiment the method is terminated without identifying said person when any one of the first, second and third thresholds is not exceeded in the respective step of checking or when the identifier has not been extracted in said step of extracting. Thereby, further processing time of the computer system can be saved whenever one of the checked criteria is not met, in which case identifying of the person is no longer possible anyway.

The first, second and third sets of steps can, in principle, be carried out in any arbitrary order, also overlapping or even in parallel. In a first favourable variant of the above-mentioned embodiment, however, a first runtime for said first set of steps, a second runtime for said second set of steps, and a third runtime for said third set of steps are estimated before carrying out said sets of steps, wherein the sets of steps are carried out in an order from low to high estimated runtime. Thereby, steps of lower runtime are carried out earlier such that each time the method terminates, the processing time of the computer system required for a step of higher runtime is saved.

In an alternative second favourable variant a first success rate for exceeding the first threshold for said first set of steps, a second success rate for exceeding the second threshold for said second set of steps, and a third success rate for exceeding the third threshold for said third set of steps are estimated before carrying out said sets of steps, wherein the sets of steps are carried out in an order from low to high estimated success rate. Thereby, steps that are more likely to result in a termination of the method are carried out first to save processing time of the computer system.

In the aforementioned variants, the runtime or the success rate can be estimated once in a preceding phase by carrying out the method several times and measuring the respective runtimes or success rates of the first, second and third sets of steps. Alternatively or additionally, the runtime or the success rate are estimated continuously ("on the fly") by measuring the runtimes of the respective sets of steps or the successes of the respective steps of checking each time the method is carried out for a different person and updating the estimated runtimes and success rates accordingly.

In a second aspect, the present invention provides a computer system for identifying a person, comprising:

a first input configured to receive at least one image of a document, which image has been recorded by a camera;
a first number of different authentication units each of which is connected to said first input and configured to compute, from the received image, a respective authenticity value indicating a probability that the image shows an identity document including a photograph of a face;
a first weighting unit which is connected to said authentication units and configured to calculate, from the computed authenticity values, an authenticity probability;
a first checking unit which is connected to the first weighting unit and configured to check whether the calculated authenticity probability exceeds a predetermined first threshold;
a second input configured to receive a representation of a person's face, which representation has been recorded by a recording device;
a second number of different verification units each of which is connected to said second input and configured to compute, from said representation, a respective verification value indicating a probability that the representation includes at least one of a predetermined pose of a face and a three-dimensional shape of a face;
a second weighting unit which is connected to said verification units and configured to calculate, from the computed verification values, a verification probability,
a second checking unit which is connected to said second weighting unit and configured to check whether the calculated verification probability exceeds a predetermined second threshold;
a third number of different matching units each of which is connected to said first and second inputs and configured to compute, from said image and said representation, a respective matching value indicating a probability that the face on said photograph matches the face in said representation;
a third weighting unit connected to said matching units and configured to calculate, from the computed matching values, a matching probability;
a third checking unit which is connected to said third weighting unit and configured to check whether the calculated matching probability exceeds a predetermined third threshold;
an extraction unit which is connected to said first input and configured to determine whether the identity document includes an identifier of a person, and, if so, to extract said identifier; and
an identifying unit which is connected to said first, second and third checking units and to said extraction unit and configured to, only when said first, second and third thresholds are each exceeded and said identifier has been extracted, identify said person by the extracted identifier;

wherein at least one of the first, second and third numbers is larger than one.

Relating to further embodiments of the system and the advantages thereof, reference is made to the above statements on the present method.

The invention will now be described in further detail by means of exemplary embodiments thereof under reference to the enclosed drawings, in which:

Fig. 1 shows an image of an identity document being recorded by a camera in a schematic perspective view;
Fig. 2 shows a representation of a person's face being recorded by a recording device in a schematic side view;
Fig. 3 shows a method for identifying a person according to the present invention in a flow chart;
Fig. 4 shows a computer system according to the present invention carrying out the method of Fig. 3 in a schematic block diagram;
Fig. 5 shows a detail of the method of Fig. 3 in a flow chart; and
Fig. 6 shows optional steps of the method of Fig. 3 in a flow chart.

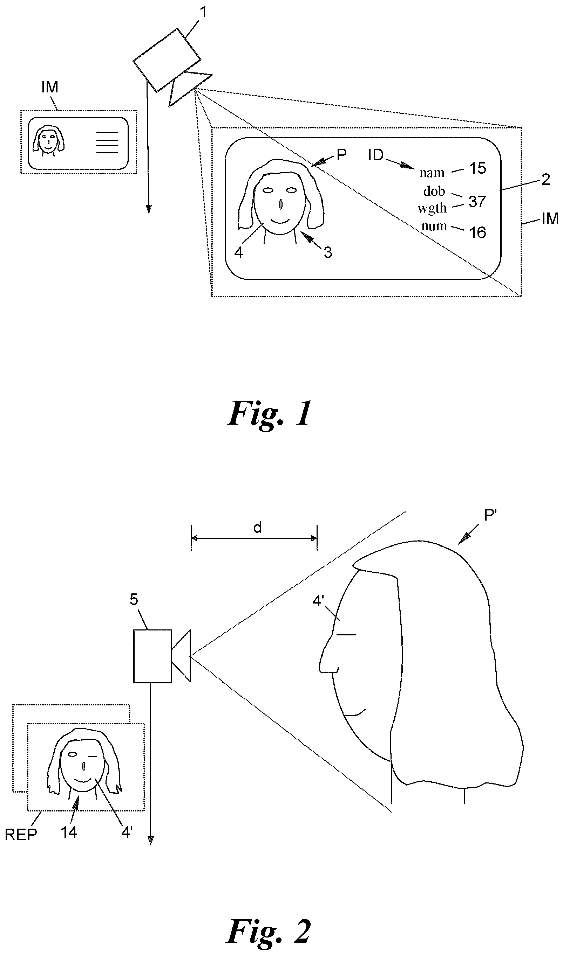

According to Fig. 1, an image IM is recorded by a camera 1, e.g., a camera 1 of a smartphone or tablet PC, a webcam, etc. The image IM shows a document 2, here: an identity document 2 of a person P including a photograph 3 of the person's face 4.

In the example of Fig. 2, a person's face 4' is recorded by a recording device 5, e.g., a camera recording two-dimensional ("2D") images or a scanner recording three-dimensional ("3D") depth maps or point clouds. Thereby, the recording device 5 generates a representation REP of the person's face 4', e.g., one or several 2D images or 3D point clouds.

It shall be noted that the person P and, thus, the face 4 on the photograph 3 included in the identity document 2 (Fig. 1) may or may not be the same as the person P' whose face 4' is recorded by the recording device 5 (Fig. 2). Moreover, the document 2 may or may not be an identity document 2 and may or may not be authentic, i.e., a genuine identity document 2; similarly, the person's face 4' recorded by the recording device 5 may or may not be live, as will be explicated in greater detail below.

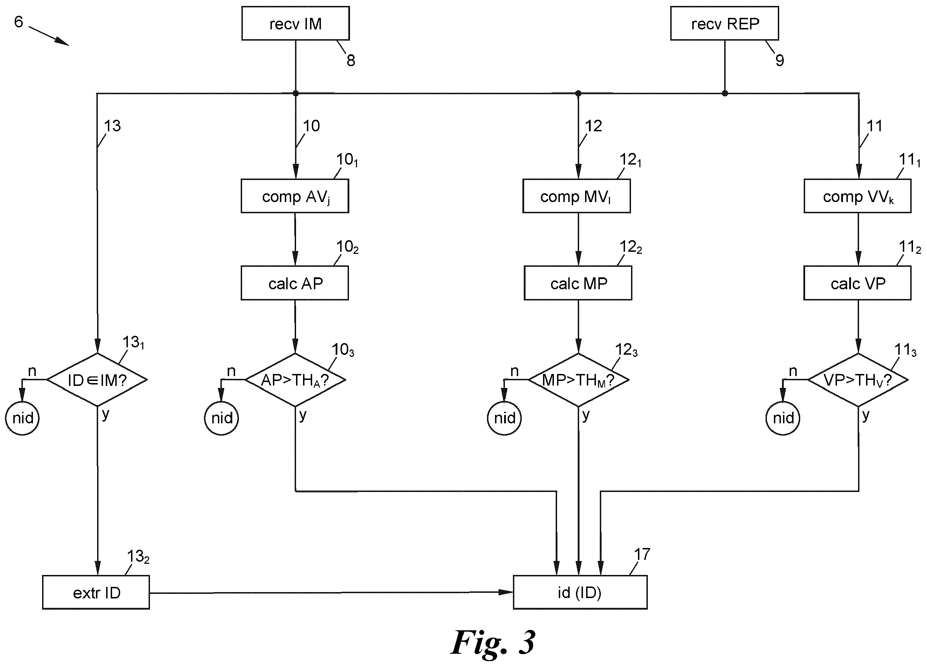

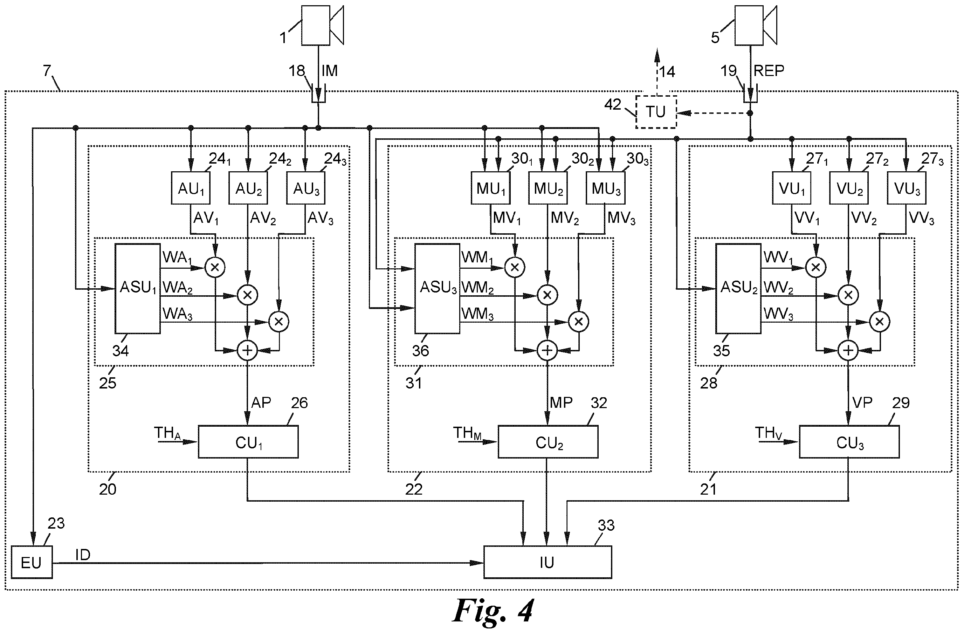

As depicted in Fig. 3, the recorded image IM and the recorded representation REP shall be used in a method 6 for identifying the person P which method 6 is carried out by a computer system 7 (Fig. 4). The method 6 may be used, e.g., for automatic entrance control, for registering with and/or logging into a computer server (of a bank, a government authority, etc.) to approve a payment or other transaction, and so forth.

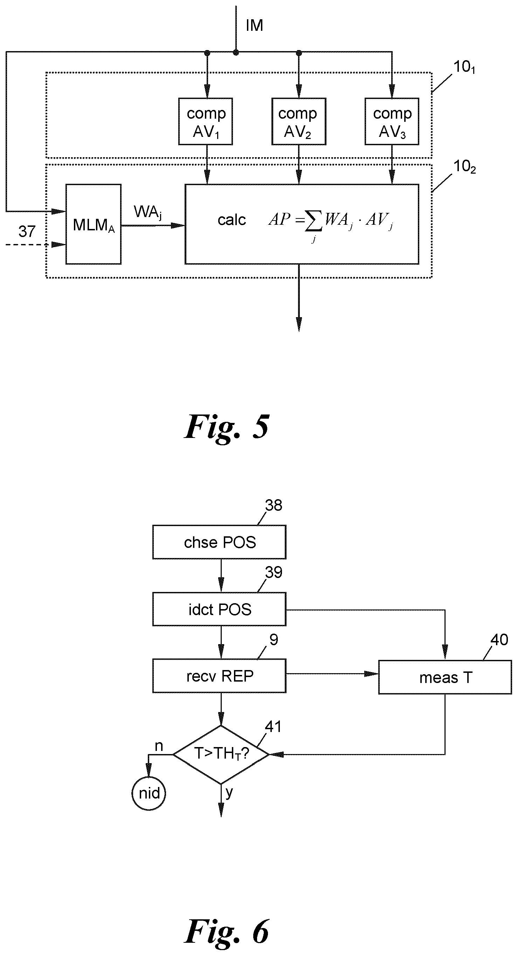

The present method 6 shall now be sketched in principle with reference to Fig. 3 and will be described in greater detail below with reference to Figs. 4 and 5.

In step 8 of the method 6, the recorded at least one image IM is received in the computer system 7. It shall be noted that more than one image IM of the identity document 2 may be received, e.g., a respective image IM of its front and back side. Similarly, in step 9 of the method 6, the recorded representation REP is received in the computer system 7. For identifying the person P, the method 6 comprises four sets of steps shown as branches 10, 11, 12 and 13 in the flow chart of Fig. 3, which sets 10 - 13 are substantially independent of each other and may be carried out in parallel, in an overlapping manner or sequentially, e.g., in a specific order.

In the first set 10 of steps, the authenticity of the identity document 2 is checked: In initial step $10_1$ of the first set 10 (Fig. 3), a first number J of different authenticity values $AV_j$ (j = 1, ..., J) is computed from the received image IM. Said first number J is predetermined to be one or larger. Each authenticity value $AV_j$ indicates a probability that the image IM shows an identity document 2, i.e., neither an arbitrary (non-identity) document 2 nor a counterfeit document but a genuine, authentic identity document 2, including the photograph 3 of the person's face 4. In subsequent step $10_2$, an authenticity probability AP is calculated from the computed authenticity values $AV_j$. In final step $10_3$ of the first set 10, it is checked whether the calculated authenticity probability AP exceeds a predetermined first threshold $TH_A$.

In the second set 11 of steps, the "liveness" of the person P' is checked, i.e., whether the representation REP has been recorded of a living person P'. To this end, in the second set 11 of steps a second number K of different verification values $VV_k$ (k = 1, ..., K) is computed from the received representation REP in step $11_1$. The second number K is predetermined to be one or larger. Each verification value $VV_k$ indicates a probability that the representation REP includes a predetermined pose 14, e.g. blinking with the left eye as symbolised in Fig. 2, tilting the head, etc. and/or a three-dimensional shape of the face 4'. As mentioned above, the representation REP is, e.g., composed of one or more 2D-images of the face 4' which shall include the pose 14 and/or several 2D-images of the face 4' recorded at different distances d from the face 4' and/or in different orientations relative to the face 4' to reproduce the three-dimensional shape of the face 4'. Alternatively, the representation REP is, e.g., composed of one or more point clouds recorded by a 3D-scanner and shall include said pose 14 and/or shape of the face 4'. In subsequent step $11_2$, a verification probability VP is calculated from the computed verification values $VV_k$; in final step $11_3$ of the second set 11 it is checked whether the calculated verification probability VP exceeds a predetermined second threshold $TH_V$.

In the third set 12 of steps, the person P' is matched with the identity document 2 as follows: In initial step $12_1$ of the third set 12 a third number L of different

matching values $MV_l$ ($1 = 1, ..., L$) is computed from the received image IM and the received representation REP, the third number L being predetermined to be one or larger. Each matching value $MV_l$ indicates a probability that the face 4 on the photograph 3 matches the face 4' in the representation REP. In subsequent step $12_2$, a matching probability VP is calculated from the computed matching values $MV_l$ and, in final step $12_3$ of the third set 12, it is checked whether the calculated matching probability MP exceeds a predetermined third threshold $TH_M$.

According to the method 6 at least one of said first, second and third numbers J, K, L is larger than one.

The fourth set 13 of steps differs from the first, second and third sets 10 - 12 of steps in that in step $13_1$ it is determined whether the identity document 2 includes an identifier ID of a person P, and, if so, said identifier ID is extracted in subsequent step $13_2$. The identifier ID is, e.g., a name 15, an account number 16 (Fig. 1), a passport number, a customer number, etc. The identifier ID is, for instance, extracted by optical character recognition ("OCR") or by reading a machine readable zone, a barcode, a QR-code, etc. when included in the identity document 2.

When each of the first, second and third thresholds $TH_A$, $TH_V$, $TH_M$ is exceeded, which is symbolised by the respective branches marked "y" emanating from steps $10_3$, $11_3$, $12_3$ in Fig. 3, and when also said identifier ID has been extracted in step $13_2$, the person P is identified by the extracted identifier ID in final step 17 of the method 6. On the other hand, the person P is not identified in step 17 when at least one of said thresholds $TH_A$, $TH_V$, $TH_M$ is not exceeded, when no identifier ID is included in the identity document 2, or when the identifier ID could not be extracted, which is symbolised by the respective branches marked "n" in Fig. 3. Optionally, the method 6 is terminated ("nid") as soon as a branch "n" (here: in steps $10_3$, $11_3$, $12_3$, $13_2$) is reached.

As shown in Fig. 4, the method 6 is carried out by the computer system 7 which, in correspondence with the method 6, comprises two inputs 18, 19, one for receiving the image IM and the other one for receiving the representation REP, three modules 20 - 22, each for carrying out a respective one of the first, second and third sets 10 - 12 of steps, and an extraction unit 23 connected to the first input 18 for carrying out the fourth set 13 of steps.

The first module 20 comprises a number of (here: three) authentication units $24_1$, $24_2$, $24_3$, ..., generally $24_j$, which are connected to the first input 18 and each of which computes one of said authenticity values $AV_j$ (step $10_1$) such that the number of authentication units $24_j$ equals said first number J. The first module 20 further comprises a first weighting unit 25 connected to the authentication units $24_j$ for calculating, from the computed authenticity values $AV_j$, the authenticity probability AP (step $10_2$), and a first checking unit 26 connected to the first weighting unit 25 for checking (step $10_3$).

The second module 21 comprises a number of (here: three) verification units $27_1$, $27_2$, $27_3$, ..., generally $27_k$, which are connected to the second input 19 and each of which computes one of said verification values $VV_k$ (step $11_1$), such that the number of verification units $27_k$ equals said second number K. The second module 21 further comprises a second weighting unit 28 connected to the verification units $27_k$ for calculating, from the computed verification values $VV_k$, the verification probability VP (step $11_2$), and a second checking unit 29 connected to the second weighting unit 28 for checking (step $11_3$).

The third module 22 comprises a number of (here: three) matching units $30_1$, $30_2$, $30_3$, ..., generally $30_l$, which are connected to both the first and the second inputs 18, 19 and each of which computes one of said matching values $MV_l$ (step $12_1$) such that the number of matching values $30_l$ equals said third number L. The third module 22 further comprises a third weighting unit 31 connected to the matching units $30_l$ for calculating, from the computed matching values $MV_l$, the matching probability MP (step $12_2$), and a third checking unit 32 connected to the third weighting unit 31 for checking (step $12_3$).

The computer system 7 further comprises an identifying unit 33 connected to the checking units 26, 29, 32 and the extraction unit 23 for identifying the person P as described above with reference to step 17. It shall be noted that one or more of said modules 20, 21, 22 and/or said units 23, $24_j$, 25, 26, $27_k$, 28, 29, $30_l$, 31, 32 of the computer system 7, while being connected thereto, may be physically remote from the rest of the computer system 7 and/or may be implemented as hardware or software modules or units.

The steps of computing and calculating $10_1$, $10_2$ shall now be explained in greater detail with reference to Fig. 4 and particularly to the example shown in Fig. 5, according to both of which said first number J is greater than one.

In this example J different authenticity values $AV_j$ are computed in step $10_1$ of computing by (the first number) J different authentication units $24_j$ (in the example of Fig. 4: three different authentication units $24_j$). To this end, each authentication unit $24_j$ includes, e.g., a machine learning model, such as a neural network, a decision tree, a Bayesian network, a regression analysis, a support vector machine, etc., and/or an image processing technique including perspective transformation, brightness, hue or saturation analysis, background removals, contour and corner detection, etc. Each authenticity value $AV_j$ is computed as a probability percentage or as a binary value, e.g. in a scalar; alternatively, e.g., when indicating probabilities that certain security features are included in the image 2, the authenticity value $AV_j$ reflects these probabilities in a vector or matrix as known in the art.

In step $10_2$ of calculating, the first weighting unit 25 calculates the authenticity probability AP, e.g., as an average of the computed authenticity values $AV_j$. In the

alternative embodiment of Fig. 5, the first weighting unit 25 calculates the authenticity probability AP as a weighted sum of the calculated authenticity values $AV_j$:

$$AP = \sum_{j=1}^{J} WA_j \cdot AV_j \ .$$

In this example, the first weighting unit 25 comprises a first assigning subunit 34 which is connected to the first input 18 and assigns the weights $WA_j$ of the weighted sum by a trained first machine learning model $MLM_A$ in step $10_2$. The first machine learning model $MLM_A$ has been trained on images and the corresponding accuracies of the authenticity values $AV_j$ computed by each of the authentication units $24_j$, e.g., based on properties of the trained images such as brightness, hue, saturation or resolution, and/or on the types of identity documents or security features included in the trained images.

After having been trained and upon reception of the image IM, the first assigning subunit 34 assigns, on the basis of the received image IM, higher weights $WA_j$ to authenticity values $AV_j$ of those authentication units $24_j$ that, according to the training, compute, for the received image IM, more accurate authenticity values $AV_j$ than others. The assigned weights $WA_j$ are then multiplied by the respective authenticity values $AV_j$ and added up in step $10_2$ to obtain the authenticity probability AP, whereby the accuracy of the obtained authenticity probability AP is increased relative to the accuracy of each single authenticity value $AV_j$.

Similarly, the second weighting unit 28, when the second number K is larger than one, optionally comprises a second assigning subunit 35 which is connected to the second input 19 and assigns the weights $WV_k$ of the weighted sum by a trained second machine learning model $MLM_V$ on the basis of the received representation REP in step $11_2$. To this end, the second machine learning model $MLM_V$ has been trained on representations and the corresponding accuracies of the verification values $VV_k$ computed by each verification unit $27_k$, e.g., based on properties of the representations such as brightness, hue, saturation or resolution, on poses and/or the types of faces included in the representations. Upon reception of the representation REP, the trained second machine learning model $MLM_V$ assigns higher weights $WV_k$ to more accurate verification values $VV_k$ on the basis of the representation REP as outlined in more detail with respect to the first weighting unit 25 above.

Likewise, the third weighting unit 31, when said third number L is larger than one, optionally comprises a third assigning subunit 36 which is connected to the first and second inputs 18, 19 and assigns the weights $WM_l$ of the weighted sum by a similarly trained third machine learning model $MLM_M$ on the basis of the received image IM and the received representation REP.

Each of said machine learning models $MLM_A$, $MLM_V$, $MLM_M$ is, e.g., an artificial neural network, a support vector machine, a decision tree, a Bayesian network, a regression algorithm, etc. or a combination thereof.

It is understood that the weights $WA_j$, $WV_k$, $WM_l$ of the weighted sum may also be scalars, vectors or matrices when the authenticity, verification or matching values $AV_j$, $VV_k$, $MV_l$ are scalars, vectors or matrices. Moreover, the authenticity, verification or matching probabilities AP, VP, MP and the thresholds $TH_A$, $TH_V$, $TH_M$ may also be scalars, vectors or matrices; in the latter cases said step $10_3$, $11_3$, $12_3$ of checking is carried out on the components of the respective probabilities or matrices component by component.

It shall be noted that, while each module 20, 21, 22 in the embodiment of Fig. 4 comprises three respective units $24_j$, $27_k$, $30_l$, i.e., each of the first, second and third numbers J, K, L equals three, these numbers J, K, L may be different from each other. In the optional case that one (or two) of said numbers J, K, L (for example: the third number L) equals one, the respective probability AP, VP, MP (in this example: the matching probability MP) is equal to the respective single value(s) $AV_1$, $VV_1$, $MV_1$ (in this example: to the single matching value $MV_1$, i.e. MP = $MV_1$).

In an optional embodiment, the extraction unit 23 also determines, in said step $13_1$ of determining, whether the identity document 2 includes an OCR-readable information 37 on the person P which goes beyond said personal identifier ID, such as a date of birth, a body weight, eye or hair colour, etc. If the identity document 2 includes such information 37, the weights $WA_j$, $WV_k$, $WM_l$ of at least one of said weighted sums (for example: the weights $WV_k$ of the weighted sum of verification values $VV_k$) are assigned by at least one of the respective first, second or third machine learning models $MLM_A$, $MLM_V$, $MLM_M$ (in this example: the second machine learning model $MLM_V$) not only on the basis of the received image IM and/or the representation REP but also on the basis of the OCR-read information 37. To this end, the respective machine learning model $MLM_A$, $MLM_V$, $MLM_M$ (in this example: the second machine learning model $MLM_V$) has also been trained on this information 37 and the corresponding accuracies of the respectively computed values $AV_j$, $VV_k$, $MV_l$ (in this example: the verification values $VV_k$) to assign higher weights $WA_j$, $WV_k$, $WM_l$ (in this example: $WV_k$) to more accurate values $AV_j$, $VV_k$, $MV_l$ in the respective steps $10_2$, $11_2$, $12_2$ of calculating.

Fig. 6 shows further steps 38 - 41 of an optional embodiment of the method 6, which steps 38 - 41 are carried out by a indication unit 42 of the computer system 7 (Fig. 4). According thereto, the pose 14 is at least one of a position of the face 4' in the representation REP, an orientation of the face 4' in the representation REP, and an expression of the face 4'. Prior to step 9 of receiving the representation REP, the pose 14 is chosen, in step 38, from a predetermined set of positions, orientations and/or expressions, and indicated, in step 39, to the person P to be identified. For this indicating, an indicator of the chosen pose 14, e.g. a text message describing the chosen pose 14, an image of another person adopting the chosen pose 14, etc. can be displayed to the person P on a screen or transmitted to a device, e.g., a smartphone or tablet PC of the person P. This chosen pose 14 is to be adopted by the person P when recording the representation REP that is subsequently received in step 9 of the method 6.

Optionally, as shown in Fig. 6, a time T from indicating the chosen pose 14 (step 39) to receiving the representation REP (step 9) is measured in step 40. When the measured time T exceeds a predetermined timing threshold $TH_T$, which is checked in step 41, the method 6 is terminated (branch "n") without identifying the person P, otherwise the method 6 is continued to be carried out as described.

As mentioned above, the sets 10, 11, 12, 13 of steps can, in principle, be carried out in any order. The order can, e.g., be chosen to save resources of the computer system 6. To this end, in an optional embodiment, a first runtime for the first set 10, a second runtime for the second set 11, and a third runtime for the third set 12 of steps is estimated, and the sets 10, 11, 12 of steps are carried out in an order from low to high runtime. In an alternative embodiment, a first success rate for exceeding the first threshold $TH_A$ for the first set 10, a second success rate for exceeding the second threshold $TH_V$ for the second set 11, and a third success rate for exceeding the third threshold $TH_M$ for the third set 12 of steps are estimated, and the sets 10, 11, 12 of steps are carried out in an order from low to high success rate.

In both variants the runtimes or success rates can either be estimated by measuring in a preceding phase, e.g., by carrying out the method 6 several times just for estimating. Or, alternatively, the runtimes or success rates can be estimated continuously ("online"), e.g. by monitoring, each time the method 6 is carried out, the runtimes or the results of the steps $10_3$, $11_3$, $12_3$ of checking and then updating the runtimes or success rates accordingly.

The present invention is not restricted to the specific embodiments described in detail herein, but encompasses those variants, combinations and modifications thereof that fall within the scope of the appended claims.

**Claims**

1. A method for identifying a person (P), the method (6) being carried out by a computer system (7) and comprising:

   receiving (8), in the computer system (7), at least one image (IM) of a document (2), which image (IM) has been recorded by a camera (1);
   a first set (10) of steps of computing ($10_1$), from the received image (IM), a predetermined first number of authenticity values ($AV_1$, $AV_2$, $AV_3$) each computed by a different authentication unit ($24_1$, $24_2$, $24_3$) of the computer system (7) and indicating a probability that the image (IM) shows an identity document (2) including a photograph (3) of a face (4), calculating ($10_2$), from the computed authenticity values ($AV_1$, $AV_2$, $AV_3$), an authenticity probability (AP), and checking ($10_3$) whether the calculated authenticity probability (AP) exceeds a predetermined first threshold ($TH_A$);
   receiving (9), in the computer system (7), a representation (REP) of a person's face (4'), which representation (REP) has been recorded by a recording device (5);
   a second set (11) of steps of computing ($11_1$), from the received representation (REP), a predetermined second number of verification values ($VV_1$, $VV_2$, $VV_3$) each computed by a different verification unit ($27_1$, $27_2$, $27_3$) of the computer system (7) and indicating a probability that the representation (REP) includes at least one of a predetermined pose (14) of a face (4') and a three-dimensional shape of a face (4'), calculating ($11_2$), from the computed verification values ($VV_1$, $VV_2$, $VV_3$), a verification probability (VP), and checking ($11_3$) whether the calculated verification probability (VP) exceeds a predetermined second threshold ($TH_V$);
   a third set (12) of steps of computing ($12_1$), from the received image (IM) and the received representation (REP), a predetermined third number of matching values ($MV_1$, $MV_2$, $MV_3$) each computed by a different matching unit ($30_1$, $30_2$, $30_3$) of the computer system (7) and indicating a probability that the face (4) on said photograph (3) matches the face (4') in said representation (REP), calculating ($12_2$), from the computed matching values ($MV_1$, $MV_2$, $MV_3$), a matching probability (MP), and checking ($12_3$) whether the calculated matching probability (MP) exceeds a predetermined third threshold ($TH_M$);
   determining ($13_1$) whether the identity document (2) includes an identifier (ID) of a person (P), and, if so, extracting ($13_2$) said identifier (ID); and
   only when said first, second and third thresholds ($TH_A$, $TH_V$, $TH_M$) are each exceeded and said identifier (ID) has been extracted, identifying (17) said person (P) by the extracted identifier (ID);
   wherein at least one of said first, second and third numbers is larger than one.

2. The method according to claim 1, **characterised in that** said pose (14) is at least one of a position of said face (4') in the representation (REP), an orientation of said face (4') in the representation (REP), and an expression of said face (4'), and further comprising, prior to said step of receiving (9) the representation (REP), choosing (38) said pose (14) from a predetermined set of positions, orientations and/or expressions, and indicating (39) the person (P) to be identified, the chosen pose (14) to be adopted by the person (P).

3. The method according to claim 2, **characterised by** measuring (40) a time (T) from indicating (39) the chosen pose (14) until receiving (9) the representation (REP) and, when the measured time (T) exceeds a predetermined timing threshold ($TH_T$), terminating the method (6) without identifying said person (P).

4. The method according to any one of claims 1 to 3, wherein the first number is larger than one, the authenticity probability (AP) is calculated as a weighted sum of the authenticity values ($AV_1$, $AV_2$, $AV_3$), and the weights ($WA_1$, $WA_2$, $WA_3$) of the weighted sum are assigned by a trained first machine learning model on the basis of the received image (IM).

5. The method according to any one of claims 1 to 4, wherein the second number is larger than one, the verification probability (VP) is calculated as a weighted sum of the verification values ($VV_1$, $VV_2$, $VV_3$), and the weights ($WV_1$, $WV_2$, $WV_3$) of the weighted sum are assigned by a trained second machine learning model on the basis of the received representation (REP).

6. The method according to any one of claims 1 to 5, wherein the third number is larger than one, the matching probability (MP) is calculated as a weighted sum of the matching values ($MV_1$, $MV_2$, $MV_3$), and the weights ($WM_1$, $WM_2$, $WM_3$) of the weighted sum are assigned by a trained third machine learning model on the basis of the received image (IM) and the received representation (REP).

7. The method according to any one of claims 4 to 6, **characterised in that**, in said step of determining ($13_1$), it is also determined whether the identity document (2), apart from said identifier (ID), includes OCR-readable information (37) on said person, and, if so, said information (37) is OCR-read and the weights ($WA_j$, $WV_k$, $WM_l$) of at least one of said weighted sums are assigned by the respective machine learning model also on the basis of the OCR-read information (37).

8. The method according to any one of claims 1 to 7, **characterised in that**, when any one of the first, second and third thresholds ($TH_A$, $TH_V$, $TH_M$) is not exceeded in the respective step ($10_3$, $11_3$, $12_3$) of

checking or when the identifier (ID) has not been extracted in said step of extracting ($13_2$), the method (6) is terminated without identifying said person (P).

9. The method according to claim 8, **characterised by**, before carrying out said sets (10, 11, 12) of steps, estimating
a first runtime for said first set (10) of steps, a second runtime for said second set (11) of steps, and a third runtime for said third set (12) of steps;
wherein said sets (10, 11, 12) of steps are carried out in an order from low to high estimated runtimes.

10. The method according to claim 8, **characterised by**, before carrying out said sets (10, 11, 12) of steps, estimating
a first success rate for exceeding the first threshold ($TH_A$) for said first set (10) of steps, a second success rate for exceeding the second threshold for said second set (11) of steps, and a third success rate for exceeding the third threshold ($TH_M$) for said third set (12) of steps;
wherein said sets (10, 11, 12) of steps are carried out in an order from low to high estimated success rate.

11. A computer system for identifying a person (P), comprising:

a first input (18) configured to receive at least one image (IM) of a document (2), which image (IM) has been recorded by a camera (1);
a first number of different authentication units ($24_1$, $24_2$, $24_3$) each of which is connected to said first input (18) and configured to compute, from the received image (IM), a respective authenticity value ($AV_1$, $AV_2$, $AV_3$) indicating a probability that the image (IM) shows an identity document (2) including a photograph (3) of a face (4);
a first weighting unit (25) which is connected to said authentication units ($24_1$, $24_2$, $24_3$) and configured to calculate, from the computed authenticity values ($AV_1$, $AV_2$, $AV_3$), an authenticity probability (AP);
a first checking unit (26) which is connected to the first weighting unit (25) and configured to check whether the calculated authenticity probability (AP) exceeds a predetermined first threshold ($TH_A$);
a second input (19) configured to receive a representation (REP) of a person's face (4'), which representation (REP) has been recorded by a recording device (5);
a second number of different verification units ($27_1$, $27_2$, $27_3$) each of which is connected to said second input (19) and configured to compute, from said representation (REP), a respec-

tive verification value ($VV_1$, $VV_2$, $VV_3$) indicating a probability that the representation (REP) includes at least one of a predetermined pose (14) of a face (4') and a three-dimensional shape of a face (4');

a second weighting unit (28) which is connected to said verification units ($27_1$, $27_2$, $27_3$) and configured to calculate, from the computed verification values ($VV_1$, $VV_2$, $VV_3$), a verification probability (VP),

a second checking unit (29) which is connected to said second weighting unit (28) and configured to check whether the calculated verification probability (VP) exceeds a predetermined second threshold ($TH_V$) ;

a third number of different matching units ($30_1$, $30_2$, $30_3$) each of which is connected to said first and second inputs (18, 19) and configured to compute, from said image (IM) and said representation (REP), a respective matching value ($MV_1$, $MV_2$, $MV_3$) indicating a probability that the face (4) on said photograph (3) matches the face (4') in said representation (REP);

a third weighting unit (31) connected to said matching units ($30_1$, $30_2$, $30_3$) and configured to calculate, from the computed matching values ($MV_1$, $MV_2$, $MV_3$), a matching probability (MP) ;

a third checking unit (32) which is connected to said third weighting unit (31) and configured to check whether the calculated matching probability (MP) exceeds a predetermined third threshold ($TH_M$) ;

an extraction unit (23) which is connected to said first input (18) and configured to determine whether the identity document (2) includes an identifier (ID) of a person (P), and, if so, to extract said identifier (ID); and

an identifying unit (33) which is connected to said first, second and third checking units (26, 29, 32) and to said extraction unit (23) and configured to, only when said first, second and third thresholds ($TH_A$, $TH_V$, $TH_M$) are each exceeded and said identifier (ID) has been extracted, identify said person (P) by the extracted identifier (ID);

wherein at least one of the first, second and third numbers is larger than one.

12. The computer system according to claim 11, wherein the first number is larger than one and the first weighting unit (25) is configured to calculate the authenticity probability (AP) as a weighted sum of the authenticity values ($AV_1$, $AV_2$, $AV_3$) and comprises a first assigning subunit (34) which is connected to said first input (18) and configured to assign the weights ($WA_1$, $WA_2$, $WA_3$) of the weighted sum by a trained first machine learning model on the basis of the received image (IM).

13. The computer system according to claim 11 or 12, wherein the second number is larger than one and the second weighting unit (28) is configured to calculate the verification probability (VP) as a weighted sum of the verification values ($VV_1$, $VV_2$, $VV_3$) and comprises a second assigning subunit (35) which is connected to said second input (19) and configured to assign the weights ($WV_1$, $WV_2$, $WV_3$) of the weighted sum by a trained second machine learning model on the basis of the received representation (REP).

14. The computer system according to any one of claims 11 to 13, wherein the third number is larger than one and the third weighting unit (31) is configured to calculate the matching probability (MP) as a weighted sum of the matching values ($MV_1$, $MV_2$, $MV_3$) and comprises a third assigning subunit (36) which is connected to said first and second inputs (18, 19) and configured to assign the weights ($WM_1$, $WM_2$, $WM_3$) of the weighted sum by a trained third machine learning model on the basis of the received image (IM) and the received representation (REP).

15. The computer system according to any one of claims 12 to 14, **characterised in that** the extraction unit (23) is further configured to also determine whether the identity document (2), apart from said identifier (ID), includes OCR-readable information (37) on said person (P), and, if so, to OCR-read said information (37), and **in that** at least one of the assigning subunits (34, 35, 36) is further configured to assign the weights ($WA_j$, $WV_k$, $WM_l$) of its weighted sum by the respective machine learning model also on the basis of the OCR-read information (37).

**Fig. 1**

**Fig. 2**

*Fig. 3*

*Fig. 4*

IM

comp AV$_1$    comp AV$_2$    comp AV$_3$

10$_1$

37    MLM$_A$    WA$_j$    calc    $AP = \sum_j WA_j \cdot AV_j$

10$_2$

**Fig. 5**

38    chse POS

39    idct POS

9    recv REP

40    meas T

41    T>TH$_T$?

n

nid

y

**Fig. 6**

Europäisches
Patentamt
European
Patent Office
Office européen
des brevets

# EUROPEAN SEARCH REPORT

Application Number

EP 21 16 4791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2016/131083 A1 (S2D PTY LTD [AU]) 25 August 2016 (2016-08-25) * paragraph [0050] - paragraph [0052] * * paragraph [0056] * * paragraph [0060] * * paragraph [0062] - paragraph [0063] * * paragraph [0067] * * paragraph [0070] - paragraph [0071] * * paragraph [0079] * ----- | 1-15 | INV. G06K9/00 G06K9/62 G06F21/45 G06Q50/30 |
| Y | BLUE JUANITA ET AL: "A Review of Identity, Identification and Authentication", INTERNATIONAL JOURNAL FOR INFORMATION SECURITY RESEARCH, vol. 8, no. 2, 30 June 2018 (2018-06-30), pages 794-804, XP055840529, DOI: 10.20533/ijisr.2042.4639.2018.0091 Retrieved from the Internet: URL:https://infonomics-society.org/wp-content/uploads/ijisr/published-papers/volume-8-2018/A-Review-of-Identity-Identification-and-Authentication.pdf> * section 2.1 * ----- | 1-15 | |
| Y | US 2014/016837 A1 (NECHYBA MICHAEL CHRISTIAN [US] ET AL) 16 January 2014 (2014-01-16) * paragraph [0153]; figure 11 * * paragraph [0157] * ----- -/-- | 2,3 | TECHNICAL FIELDS SEARCHED (IPC) G06K G06F G06Q |

The present search report has been drawn up for all claims

| Place of search | Date of completion of the search | Examiner |
|---|---|---|
| The Hague | 16 September 2021 | Rajadell Rojas, Olga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EP 4 064 119 A1**

Europäisches
Patentamt

European
Patent Office

Office européen
des brevets

# EUROPEAN SEARCH REPORT

Application Number

EP 21 16 4791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TASKIRAN MURAT ET AL: "Face recognition: Past, present and future (a review)", DIGITAL SIGNAL PROCESSING, ACADEMIC PRESS, ORLANDO,FL, US, vol. 106, 16 July 2020 (2020-07-16), XP086271565, ISSN: 1051-2004, DOI: 10.1016/J.DSP.2020.102809 [retrieved on 2020-07-16] * section 2.5; page 6 * | 2,3 | |

TECHNICAL FIELDS
SEARCHED (IPC)

The present search report has been drawn up for all claims

| Place of search | Date of completion of the search | Examiner |
|---|---|---|
| The Hague | 16 September 2021 | Rajadell Rojas, Olga |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 16 4791

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2021

| Patent document cited in search report | | Publication date | Patent family member(s) | | Publication date |
|---|---|---|---|---|---|
| WO 2016131083 | A1 | 25-08-2016 | NONE | | |
| US 2014016837 | A1 | 16-01-2014 | CN | 103514439 A | 15-01-2014 |
| | | | EP | 2680191 A2 | 01-01-2014 |
| | | | KR | 20140001163 A | 06-01-2014 |
| | | | US | 8542879 B1 | 24-09-2013 |
| | | | US | 2014016837 A1 | 16-01-2014 |
| | | | US | 2014307929 A1 | 16-10-2014 |

EPO FORM P0459

For more details about this annex : see Official Journal of the European Patent Office, No. 12/82